# EUROPEAN PATENT APPLICATION

(11) **EP 2 322 941 A1**
(43) Date of publication of application: **18.05.2011**
(21) Application number: 09804989.3
(22) Date of filing: 29.07.2009
(51) Int. Cl.: G01N 35/10

(54) **AUTOMATIC ANALYZING DEVICE**

(30) Priority: 07.08.2008 JP 2008203692
(71) Applicant: Hitachi High-Technologies Corporation, Minato-ku Tokyo 105-8717 (JP)
(72) Inventor: MISHIMA Hiroyuki, Hitachinaka-shi Ibaraki 312-8504 (JP); NAKASAWA Takashi, Hitachinaka-shi Ibaraki 312-8504 (JP)
(74) Representative: Strehl Schübel-Hopf & Partner
(86) International application number: PCT/JP2009/063837
(87) International publication number: WO 2010/016506

(57) **Abstract**

When dispensing from one specimen is repeated a plurality of times, the cleaning liquid adhering to an outer wall of a cleaned dispensing nozzle is likely to be moved into a sample vessel during aspiration of the sample and result in reduced sample concentration or deteriorated analytical accuracy.

This invention provides a cleaning mechanism for an automatically adjustable and highly reliable automatic analyzer, and the cleaning mechanism has the following features and characteristics.

A cleaning range of the dispensing nozzle outer wall is changed according to a range in which dirt adheres to the nozzle. Additionally, an ejector effect acting between the dispensing nozzle and a cleaning liquid flow prevents a decrease in the concentration of the sample by reducing the amount of cleaning liquid which adheres to the dispensing nozzle outer wall.

Furthermore, the cleaning mechanism uses a liquid level detection function of the dispensing nozzle and a nozzle pipe internal-pressure change detection function to determine a discharge state of the cleaning liquid flow and obtain an appropriate cleaning range.

## Description

### Technical Field

The present invention relates generally to automatic analyzers that assay desired components contained in a biological specimen, and more particularly to an automatic analyzer that uses a cleaning liquid to remove any liquid droplets adhering to an outer wall of a nozzle.

### Background Art

Automatic analyzers are apparatuses that dispense a specimen such as the serum obtained by centrifuging blood, and a reagent into reaction vessels by means of a dispensing unit, then stir the specimen and the reagent, and after photometry of the absorbance that varies with the resulting reactions between the reagent and the serum components, calculate the concentrations of desired components contained in the specimen.

Since the automatic analyzers usually need to repeat the above analytical operation, each analyzer has a function that periodically cleans the inner and outer walls of a dispensing nozzle which has aspirated the specimen or a sample such as the reagent. Measurement errors and/or the contamination of the specimen/reagent may result if the sample adhering to the inner and outer walls of the dispensing nozzle becomes mixed with another sample. The dispensing nozzle is therefore cleaned to avoid these unwanted events. When the inner wall of the dispensing nozzle is cleaned, the sample adhering to the inner wall is removed by supplying a cleaning liquid to a pipeline communicating with the dispensing nozzle. When the outer wall of the dispensing nozzle is cleaned, the sample adhering to the outer wall is removed by discharging the cleaning liquid from a cleaning nozzle disposed near the dispensing nozzle. After the cleaning of the dispensing nozzle outer wall, there has been a tendency for a very small amount of cleaning liquid to remain on the outer wall of the dispensing nozzle. However, since a large quantity of specimens have been used during the analysis with each such existing automatic analyzer and since one analytical operation has been conducted from one specimen, even if the cleaning liquid adhering to the distal end of the dispensing nozzle is moved into the sample, this has little influenced any changes in the concentration of the sample (i.e., the thinning of the sample).

A decrease in the concentration of the sample due to the movement of the cleaning liquid into the sample, however, has been liable to affect measuring accuracy if one specimen is analyzed over a plurality of items or if the tendency towards using a smaller amount of sample during one analytical operation further grows. Accordingly, JP-2002-340913-A describes a method of reducing changes in concentration of a sample by removing residues of a cleaning liquid from a distal end of a dispensing nozzle by means of vacuum aspiration.

### Prior Art References

### Patent Documents

Patent Document 1: JP-2002-340913-A

### Summary of the Invention

### Problems to be Solved by the Invention

In recent years, at the testing centers and other medical laboratory facilities contracting to test/examine samples on behalf of hospitals and clinics, automatic analyzers are required to reduce sample consumption and to analyze more efficiently the specimens moved between a plurality of analyzers, so that the automatic analyzers are expected to further improve throughput. These tendencies have increased the number of analytical items to be conducted upon one specimen, and have resulted in one specimen being repeatedly dispensed a plurality of times. Because of repeated cleaning of a dispensing nozzle upon completion of each dispensing operation, the number of cleaning operations on the dispensing nozzle has increased and a cleaning liquid adhering to the outer wall of the dispensing nozzle has been more prone to be moved into the specimen and hence to unignorably reduce the concentration of the specimen.

Although the method described in JP-2002-340913-A uses vacuum aspiration to remove cleaning liquid droplets adhering to the outer wall of the dispensing nozzle, a decrease in throughput has been likely since aspiration of the cleaning liquid remaining on the outer wall of the nozzle is added to an end of the cleaning of the dispensing nozzle.

An object of the present invention is to minimize changes in concentration of a specimen due to movement of a cleaning liquid into the specimen by reducing the amount of cleaning liquid adhering to an outer wall of a dispensing nozzle.

Another object of the present invention is to provide a cleaning device that controls a cleaning zone automatically to reduce the amount of cleaning liquid adhering.

### Means for Solving the Problems

An automatic analyzer configuration of the present invention, intended to solve the foregoing problems, includes a dispensing nozzle that aspirates/discharges a sample, and a cleaning nozzle that discharges a cleaning liquid flow to an outer wall of the dispensing nozzle, the automatic analyzer configuration further comprising: a nozzle driving unit that controls operation of the dispensing nozzle so that an angle θ formed between a velocity vector of the cleaning liquid flow and that of the dispensing nozzle, at a position where the dispensing nozzle exits the cleaning liquid flow, satisfies 90°<θ<180° or 180°<θ<270°.

This configuration increases relative velocity of the cleaning liquid flow with respect to the dispensing nozzle, generates an ejector effect that a faster fluid flow carries away surrounding droplets, and thus reduces the amount of cleaning liquid adhering to the outer wall of the dispensing nozzle.

Another automatic analyzer configuration for solving the foregoing problems includes a dispensing nozzle that aspirates/discharges a specimen or a reagent, and a cleaning nozzle that discharges a cleaning liquid flow to an outer wall of the dispensing nozzle, the automatic analyzer configuration further comprising: a storage unit used to store a plurality of operation patterns that define operation of the dispensing nozzle cleaned using the cleaning liquid flow discharged from the cleaning nozzle; a nozzle operation selector unit that selects, from the operation patterns stored into the storage unit as to the cleaning of the dispensing nozzle, one operation pattern based on an as-cleaned operational state of the dispensing nozzle; and a nozzle driving unit that moves the nozzle according to the pattern selected by the nozzle operation selector unit.

More specifically, since the cleaning of the dispensing nozzle before this nozzle discharges the aspirated sample to a reaction vessel is conducted to remove a superfluous specimen adhering to the outer wall at a distal end of the nozzle, the cleaning zone can be narrower than that required for transfer between specimens, a decrease in the concentration of the specimen due to movement of the cleaning liquid into the specimen can be suppressed by minimizing the cleaning zone.

Yet another automatic analyzer configuration for solving the foregoing problems is characterized in that the cleaning nozzle discharges the cleaning liquid flow at an appropriate downward angle from a horizontal direction according to a particular configuration of the cleaning or dispensing nozzle.

If the cleaning nozzle has a discharge port of a circular shape and discharges the cleaning liquid horizontally, a cross-sectional shape of the cleaning liquid flow as the dispensing nozzle crosses the liquid flow is circular and the cleaning nozzle needs to have a discharge port diameter 1 to clean a zone 1 from a distal end of the cleaning nozzle. A cross-sectional area at this time is (πl²)/4. For downward discharging from the horizontal direction, in contrast, the cleaning liquid flow is elliptical in cross-sectional shape, and discharging the cleaning liquid flow at an angle of 60°downward from the horizontal direction requires a discharge port diameter of 1/2 and a cross-sectional area of πl²/16. Water consumption for cleaning the same range can be reduced to 1/4. For discharging the cleaning liquid flow at an angle other than 90°, for example at 30°or 150°, the cleaning liquid flow can take the same cross-sectional shape as that required for horizontal discharging from the discharge port of the diameter 1.

While the above configuration achieves the intended purpose by moving the dispensing nozzle relative to an immobilized cleaning nozzle (cleaning liquid flow), other alternative possible configurations include, for example, those intended to obtain equivalent effects by driving a cleaning nozzle, or those intended to attain respective purposes by changing the amount of cleaning liquid during nozzle cleaning.

### Effects of the Invention

According to the present invention, even when the number of analytical items for one specimen is increased, the amount of cleaning liquid which adheres to the outer wall of the dispensing nozzle is minimized, while reserving a necessary range for cleaning the dispensing nozzle outer wall. Changes in the concentration of the specimen are therefore avoided or suppressed without a decrease in throughput of the apparatus, such that the apparatus reliably provides stable measurement results.

In addition, even when specimens are moved between a plurality of analyzers, the apparatus reliably provides stable analytical results.

### Brief Description of the Drawings

Fig. 1 shows principles of operation relating to cleaning for a dispensing nozzle based on an ejector effect;
Fig. 2 shows changes in concentration of a specimen according to exit angle;
Fig. 3 shows the operation of exiting a cleaning liquid;
Fig. 4 shows changes in the concentration of the specimen according to a particular cleaning range of the dispensing nozzle;
Fig. 5 shows an optimal discharge port shape of a cleaning nozzle;
Fig. 6 shows a cleaning unit equipped with an automatic flow selector valve; and
Fig. 7 shows a sequence for automatic position adjustment of the cleaning nozzle.

### Mode for Carrying Out the Invention

First, operation of an automatic analyzer applying the present invention is described below.

Before analysis is started, inner and outer walls of a dispensing nozzle are cleaned first. The inner wall is cleaned by supplying water from a pipeline communicating with the dispensing nozzle, and the outer wall is cleaned by discharging a cleaning liquid flow from a cleaning nozzle disposed near the dispensing nozzle. This cleaning process is called inter-specimen cleaning.

Next, the dispensing nozzle moves downward into a specimen vessel and after detecting a liquid level of the specimen in the specimen vessel, starts to aspirate the specimen. Since the dispensing nozzle at this time is positioned below the liquid level of the specimen, a slight amount of specimen will have stuck to the outer wall at a distal end of the dispensing nozzle when the nozzle moves upward following completion of aspiration.

After that, the dispensing nozzle moves to a cleaning tank, at which the outer wall of the nozzle is then cleaned with the cleaning liquid flow discharged from the cleaning nozzle. This cleaning process is called inter-item cleaning. While the cleaning liquid flow is being discharged from the cleaning nozzle, the dispensing nozzle exits the cleaning liquid flow and moves to a position above a reaction vessel. The dispensing nozzle moves downward into the reaction vessel, then discharges the specimen into the reaction vessel, and returns to the cleaning tank. For discharging the same specimen into next reaction vessel, the dispensing nozzle once again moves to the previous specimen vessel and aspirates the specimen into the specimen vessel. For discharging another specimen into the next reaction vessel, the dispensing nozzle executes inter-specimen cleaning to clean the nozzle over a range wider than that of inter-item cleaning, and then moves to a specimen vessel that contains the specimen to be aspirated.

The automatic analyzer conducts the analysis by repeating these successive steps. The following describes examples of a clinical test-use automatic analyzer for analyzing biological samples such as blood or urine, but these examples do not limit the present invention.

### (First Embodiment)

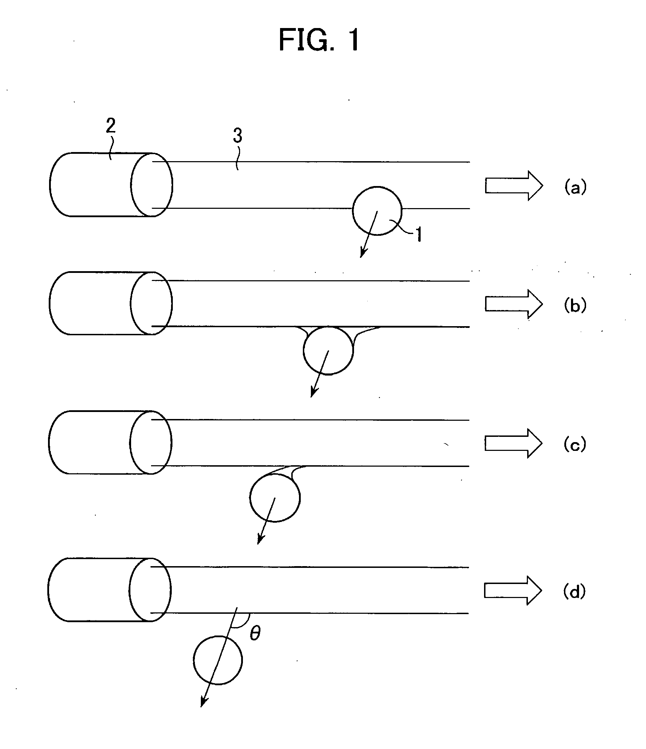

Fig. 1 is a schematic representation of a cleaning process for a dispensing nozzle based upon an ejector effect. The dispensing nozzle 1 with a 0.25-mm outside diameter moves downward into a specimen vessel, then detects a liquid level of the specimen in the vessel, and aspirates the specimen. After this, the dispensing nozzle 1 moves in a forward direction of a cleaning nozzle 2 of a cleaning tank. Next, the cleaning nozzle 2 with a 2.5-mm inside diameter discharges a cleaning liquid flow 3 downward at a 60°angle from a horizontal direction, at a velocity of 1.5 m/s. Of all the cleaning liquid flow, only a superfluous specimen adhering to an outer wall of the dispensing nozzle 1 is thus removed. The cleaning liquid flow is desirably a smooth flow that is substantially free of pulsations and always follows a constant route.

At this time, although the dispensing nozzle 1 moves across the cleaning liquid flow 3, the nozzle 1 moves along a plane on which a position at which the nozzle 1 exits the cleaning liquid flow becomes closer to an opening in the cleaning nozzle than a position at which the nozzle 1 enters the cleaning liquid flow. Referring to Fig. 1, the dispensing nozzle 1 moves across the cleaning liquid flow in step (a), and then starts exiting the liquid surface at an exit angle θ in step (b). At this time, slight quantities of droplets are adhering to the surface of the dispensing nozzle by an action of its surface tension. Upon the dispensing nozzle 1 exiting the liquid surface in step (c), the droplets adhering to the surface of the dispensing nozzle 1 are carried away along the cleaning liquid flow by the ejector effect that the cleaning liquid flow generates in step (d). During this process, the nozzle moves against the flow of the cleaning liquid and thus a velocity of the cleaning liquid flow 3 relative to the dispensing nozzle 1 increases, resultingly augmenting the ejector effect. The quantity of cleaning liquid droplets adhering to the dispensing nozzle 1, therefore, is reduced in comparison with right-angle exiting from the cleaning liquid flow 3.

Additionally, before or during a phase of the cleaning process for the dispensing nozzle 1 existing before specimen aspiration, the cleaning nozzle 2 is rotated so that an angle between the discharge direction of the cleaning liquid flow 3 and a traveling direction of the dispensing nozzle 1 existing immediately after being cleaned is greater than 90°. Before or during a phase of the cleaning process for the dispensing nozzle 1 existing after specimen aspiration, the cleaning nozzle 2 is rotated so that an angle between the discharge direction of the cleaning liquid flow 3 and a traveling direction of the dispensing nozzle 1 existing immediately after being cleaned is greater than 90°. The cleaning nozzle 2 oscillates in this way according to the particular moving direction of the dispensing nozzle 1, with the result that the amount of cleaning liquid adhering is reduced in all cleaning phases.

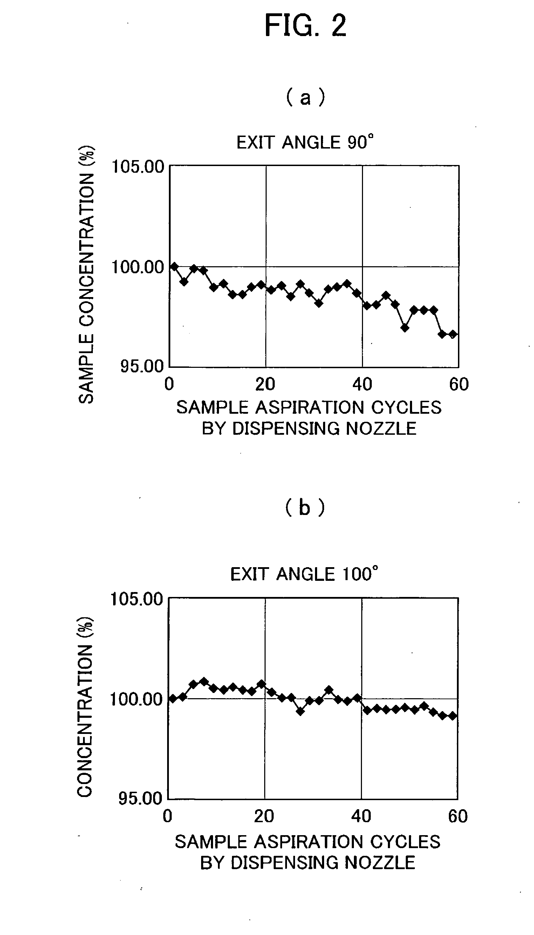

Fig. 2 shows differences between a specimen concentration change pattern obtained by repeatedly dispensing one specimen a plurality of times and cleaning the outer wall of the dispensing nozzle in normal manner during each dispensing cycle (i.e., in the case that the nozzle exits the cleaning liquid flow at right angles), and a specimen concentration change pattern obtained when the nozzle is cleaned by utilizing the ejector effect. Graph (a), which applies to the case that the dispensing nozzle 1 exits the cleaning liquid flow 3 at right angles, indicates that because of the cleaning liquid droplets adhering to the outer wall of the dispensing nozzle, the concentration of the specimen decreases in proportion to the number of times that the dispensing nozzle 1 stops below the liquid level of the specimen. In contrast, graph (b), which applies to a case that an exit angle of 100° is assigned as an angle of the plane where the dispensing nozzle 1 crosses the cleaning liquid flow and exits by utilizing the ejector effect, indicates that the ejector effect reduces the amount of cleaning liquid adhering to the outer wall of the dispensing nozzle 1, and thus that decreases in the concentration of the specimen are suppressed.

### (Second Embodiment)

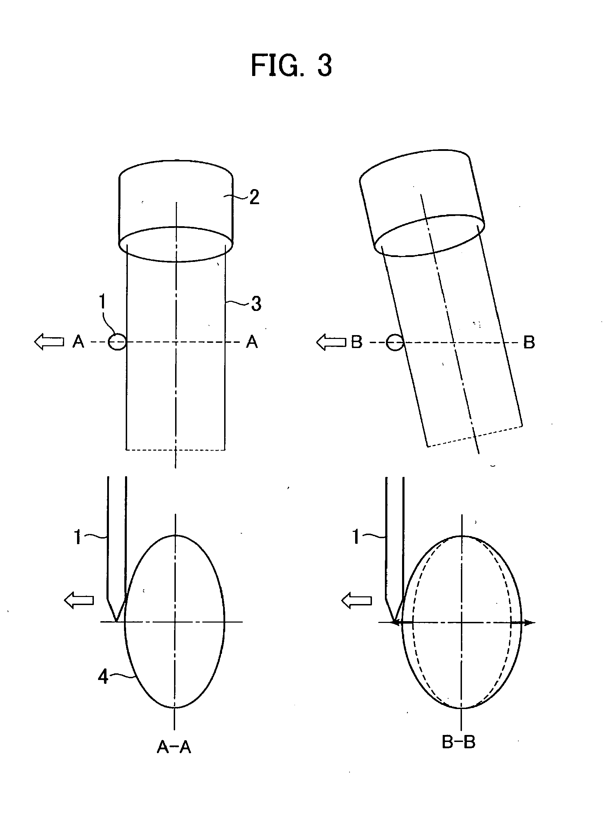

Fig. 3 is a sectional view of the cleaning liquid flow 3 as discharged from the cleaning nozzle 2 with a 2.5-mm discharge port diameter at a 60°downward angle from a horizontal direction when the dispensing nozzle 1 moves across the liquid flow. For inter-item cleaning intended to clean the distal end of the dispensing nozzle, moving the dispensing nozzle 1 horizontally only across an upper-half section of the cleaning liquid flow 3 causes the dispensing nozzle to exit an upper half of an elliptical section with the distal end of the nozzle last (see longitudinal sectional view A-A). Since the distal end of the dispensing nozzle is pointed, this end has a small surface area and is weak in droplet-holding force. Because of this, the amount of cleaning liquid flow 3 adhering to the outer wall of the dispensing nozzle can be reduced if the distal end of the nozzle last exits the cleaning liquid flow 3.

In addition, as the traveling direction of the dispensing nozzle 1 relative to the discharge direction of the cleaning liquid flow 3 inclines more from a perpendicular state (see transverse sectional view B-B), the sectional shape of the ellipse spreads more in a transverse direction and the distal end of the dispensing nozzle 1 spends a greater deal of time in completing the movement from a central axis of the ellipse to an exit position. Droplets of the cleaning liquid flow 3 that adhere to the dispensing nozzle distal end that has come into contact with the cleaning liquid flow 3 during this time are carried away by the ejector effect when the droplets move to the dispensing nozzle distal end and the dispensing nozzle distal end last exits the cleaning liquid flow 3. The amount of cleaning liquid flow 3 which adheres to the dispensing nozzle end is reduced in this way.

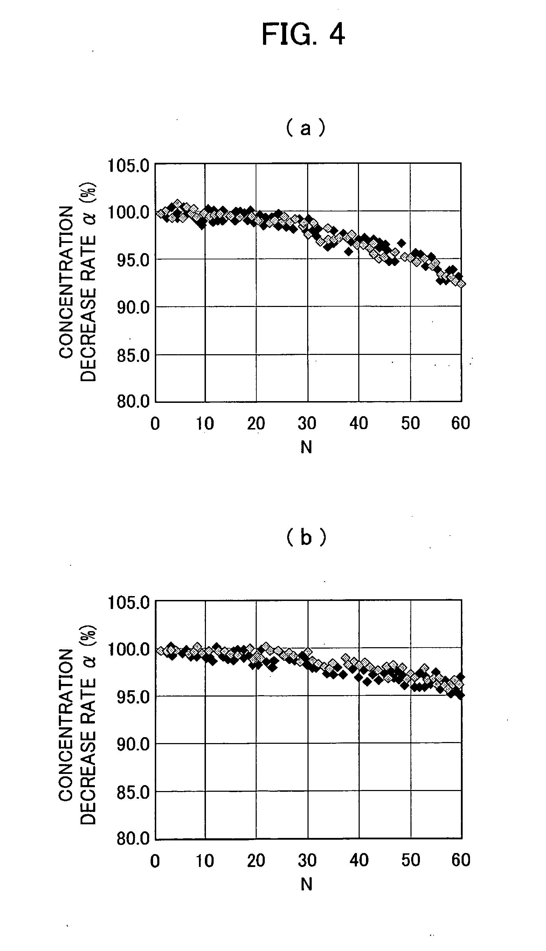

Fig. 4 is a plotted representation of specimen concentration changes obtained by repeatedly dispensing one specimen a plurality of times and changing the cleaning range of the nozzle distal end during each cleaning cycle.

Graph (a) shows the specimen concentration changes when a nozzle distal end-cleaning range is set to 5 mm. This graph indicates that the concentration of the specimen decreases with increases in the number of dispensing operations, eventually to 93% of original specimen concentration.

Graph (b) shows the specimen concentration changes when a nozzle distal end-cleaning range is set to 3 mm. Decreases in the concentration of the specimen are more gentle than that in case (a), with the concentration of the specimen remaining at about 96% of its original value, even after dispensing has been repeated the same number of times as in case (a). These results indicate that the decreases in the specimen concentration are suppressed.

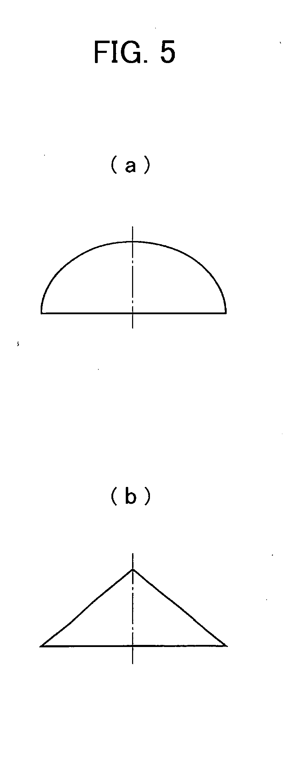

If, as shown in Fig. 5, the discharge port of the cleaning nozzle is optimally shaped into upward-convexed semi-ellipse (a) or inverse triangle (b), optimal cleaning that minimizes the adhering of droplets to the dispensing nozzle 1 can be achieved, irrespective of the cleaning process and without changing a position of the dispensing nozzle. The amount of cleaning liquid flow adhering to the dispensing nozzle distal end can be reduced using this cleaning method, without a special hardware unit or a functional addition.

### (Third Embodiment)

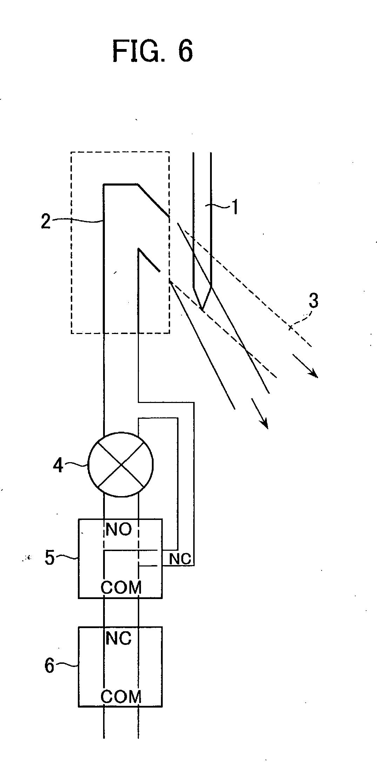

Fig. 6 shows a cleaning unit that maximizes the ejector effect by moving the cleaning liquid flow.

The cleaning nozzle 2 is connected to an automatic flow selector valve 4 on a cleaning liquid pipeline connected to the cleaning nozzle 2. The cleaning nozzle 2 has a discharge port diameter of 2.5 mm and discharges the cleaning liquid flow 3 downward at a 60°angle from a horizontal direction, at a velocity of 1.5 m/s. The dispensing nozzle 1 moves to the cleaning tank and stops at a distance of about 2.8 mm from an inner upper end of the cleaning nozzle discharge port. For inter-specimen cleaning that precedes a start of analysis, since the widest possible range on the dispensing nozzle 1 requires cleaning, when the automatic flow selector valve 4 is appropriately adjusted, the cleaning liquid flow 3 is discharged downward as denoted by dashed lines, and as a result, a range of about 5 mm on the dispensing nozzle comes into contact with the cleaning liquid.

After specimen aspiration, which involves inter-item cleaning to remove the specimen adhering to the outer wall of the dispensing nozzle, the automatic flow selector valve 4 has its degree of opening narrowed for a smaller flow rate before the dispensing nozzle 1 moves to the cleaning tank. Consequently, since the cleaning nozzle 2 remains unchanged in cross-sectional area, when velocity decreases to 0.2 m/s, the cleaning liquid flow 3 follows a further downward movement path as denoted by solid lines. Thus, the amount of cleaning liquid is adjusted for inter-item cleaning of the dispensing nozzle 1 to be performed in an upper-half region of an elliptical section of the cleaning liquid flow 3. When the dispensing nozzle 1 exits the cleaning liquid flow 3, therefore, the distal end of the nozzle 1 last exits the cleaning liquid flow 3. The amount of cleaning liquid adhering to the dispensing nozzle is reduced as a result.

When the cleaning of the dispensing nozzle 1 is started, the cleaning liquid flow 3 is discharged downward as denoted by the dashed lines. Immediately before the dispensing nozzle 1 exits the cleaning liquid flow 3, therefore, narrowing the degree of opening of the automatic flow selector valve 4 makes the flow rate controllable for the cleaning liquid flow 3 to be discharged further downward as denoted by the solid lines. Thus, the distal end of the dispensing nozzle 1 last exits the cleaning liquid flow 3, and decreases in specimen concentration due to movement of the cleaning liquid into the specimen are suppressed, even if the dispensing nozzle 1 is not changed in height during cleaning of the dispensing nozzle 1.

The above advantageous effects are yielded by using the automatic flow selector valve 4, but equivalent effects can likewise be obtained by combining a two-way valve 5 and a three-way valve 6. For inter-specimen cleaning, control is provided for the two-way valve 5 to open after the three-way valve 6 has been switched for the cleaning liquid to flow towards a normally open (NO) position to which a pipe of a larger diameter is connected. For inter-item cleaning, before the two-way valve 5 is opened, the three-way valve 6 is switched for the cleaning liquid to flow towards a normally closed (NC) position to which a pipe of a smaller diameter is connected. Consequential narrowing of the flow pathway reduces the discharge velocity, moving the path of the cleaning liquid flow 3 further downward.

### (Fourth Embodiment)

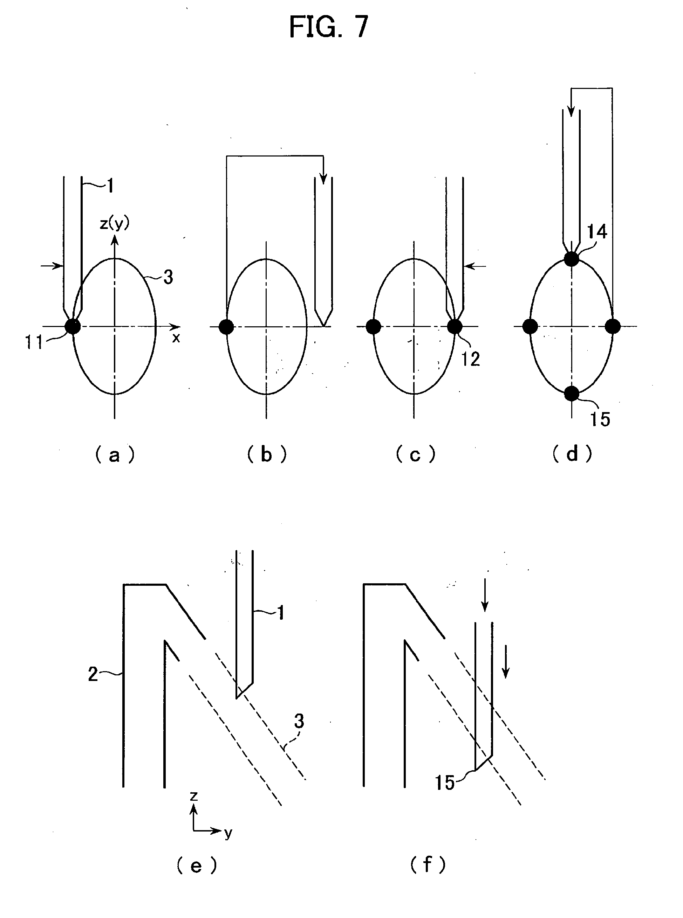

Fig. 7 is a schematic diagram that shows automatic position control of a dispensing nozzle cleaning liquid flow 3 to obtain a maximal ejector effect.

A dispensing nozzle 1 includes a liquid level detection function that detects contact with a liquid level. When an automatic analyzer is powered on, the analyzer starts initialization operation. During the initialization operation, the dispensing nozzle 1 moves in a horizontal direction (x-direction) until it has detected the liquid level of the cleaning liquid flow 3. This state is shown as (a) in Fig. 7. After memorizing the liquid level detection position 11 of the cleaning liquid flow 3 and moving in a z-direction (or a y-direction) to a position at which the dispensing nozzle 1 does not come into contact with the cleaning liquid flow 3, the dispensing nozzle moves in the horizontal direction to a position at which the nozzle is kept free from contact with the cleaning liquid flow 3, and then returns to the x-axis. This state is shown as (b) in Fig. 7. Next, the dispensing nozzle 1 moves horizontally in a minus x-direction until it has detected a current liquid level, and memorizes the liquid level detection position 12 of the cleaning liquid flow. This state is shown as (c) in Fig. 7. After that, the dispensing nozzle 1 once again moves in the z-direction (or the y-direction) to a position at which the dispensing nozzle 1 does not come into contact with the cleaning liquid flow 3, and then moves horizontally to a position on a perpendicular bisector of the detection positions 11 and 12. The dispensing nozzle 1 further moves in the minus z-direction (or a minus y-direction) until it has detected a particular liquid level of the cleaning liquid flow 3, and memorizes the liquid level detection position 14 of the cleaning liquid flow 3. This state is shown as (d) and (e) in Fig. 7.

Next while repeating aspiration/discharge operation, the dispensing nozzle repeats an inching motion in the minus z-direction (or the minus y-direction) until the nozzle distal end has become exposed from the cleaning liquid flow. A possible method of determining whether the distal end of the dispensing nozzle has become exposed is by observing how a signal waveform of a pressure inside a pipe connected to the dispensing nozzle will change when air is entrained therein. This state is shown as (f) in Fig. 7. The dispensing nozzle memorizes the detection position 15 at which the distal end of the dispensing nozzle became exposed.

If the cleaning liquid has its cross-sectional shape and position estimated and the dispensing nozzle 1 is appropriately moved, the position of the dispensing nozzle can be adjusted to obtain an appropriate cleaning effect.

Substantially the same position adjustment as that described above is likewise achievable only by observing the pressure waveform, without using liquid level detection.

In addition, since the cleaning range of the dispensing nozzle 1 is known, use of the above adjusting method allows dust and dirt adhering to the distal end of the dispensing nozzle to be removed by cleaning over a range wider than normal cleaning range, during an end of analysis.

### (Fifth Embodiment)

Upon the start of the initialization operation following completion of apparatus power-on, the dispensing nozzle 1 moves to the position 14 during the dispensing nozzle position control operation shown in Fig. 7. If the liquid level is not detectible, the dispensing nozzle 1 remains in a stopped condition and the automatic flow selector valve 4 on the cleaning liquid pipeline shown in Fig. 6 is opened to increase the flow rate and keep the path of the cleaning liquid flow 3 constant until the nozzle has detected the liquid level. The amount of cleaning liquid which adheres to the nozzle can be reduced by maintaining an optimal exit position.

### (Sixth Embodiment)

Upon the start of the initialize operation following completion of apparatus power-on, the dispensing nozzle 1 moves to the position 14 during the dispensing nozzle position control operation shown in Fig. 7 and confirms the liquid level of the cleaning liquid flow. If this liquid level is outside a position control range of the dispensing nozzle 1, since internal clogging or other unwanted states of the pipeline for supplying the cleaning liquid may be occurring, the inside of the pipeline is cleaned and the internal clogging or other unwanted states are eliminated. The amount of cleaning liquid which adheres to the nozzle can be reduced by maintaining an optimal exit position.

Description of the Reference Numerals
- 1: Dispensing nozzle
- 2: Cleaning nozzle
- 3: Cleaning liquid flow
- 4: Automatic flow selector valve
- 5: Two-way solenoid valve
- 6: Three-way solenoid valve

## Claims

1. An automatic analyzer including a dispensing nozzle that aspirates/discharges a specimen or a reagent,
and a cleaning nozzle that discharges a cleaning liquid flow to an outer wall of the dispensing nozzle, the automatic analyzer further comprising:
a nozzle driving unit that controls operation of the dispensing nozzle so that an angle θ formed between a velocity vector of the cleaning liquid flow and that of the dispensing nozzle, at a position where the dispensing nozzle exits the cleaning liquid flow, satisfies 90°<θ<180° or 180°<θ<270°.

2. The automatic analyzer according to claim 1, further comprising:
a cleaning nozzle angle changing mechanism changes an opening direction of the cleaning nozzle according to a particular moving direction of the dispensing nozzle, the cleaning nozzle changing a discharge angle of the cleaning liquid flow.

3. An automatic analyzer including a dispensing nozzle that aspirates/discharges a specimen or a reagent, and a cleaning nozzle that discharges a cleaning liquid flow to an outer wall of the dispensing nozzle, the automatic analyzer further comprising:
a storage unit used to store a plurality of cleaning ranges of the dispensing nozzle to be cleaned using the cleaning liquid flow;
a cleaning range selector unit that selects, from the dispensing nozzle cleaning ranges stored in the storage unit, one cleaning range appropriate for the kind of specimen or reagent that the dispensing nozzle which has been cleaned aspirates; and
a nozzle driving unit that controls the dispensing nozzle so that if the selected cleaning range of the dispensing nozzle is too narrow, only an upper half of a section of the cleaning liquid flow to be discharged from the cleaning nozzle is used for cleaning, and so that if the selected cleaning range of the dispensing nozzle is wide enough, the entire section of the cleaning liquid flow to be discharged from the cleaning nozzle is used for cleaning.

4. The automatic analyzer according to claim 3, wherein: an opening that the cleaning nozzle includes to discharge the cleaning liquid flow is of a shape including a portion convexed upward with respect to an axial direction of the dispensing nozzle crossing the cleaning liquid flow.

5. The automatic analyzer according to claim 3, further including a liquid level detection circuit that detects contact of the dispensing nozzle with a liquid level, and a pressure gauge that detects changes in internal pressure of the dispensing nozzle, the automatic analyzer further comprising:
a cleaning liquid flow estimating unit that uses at least one of the liquid level detection circuit and the pressure gauge to acquire profile information on the cleaning liquid flow discharged from the cleaning nozzle, the cleaning liquid flow estimating unit estimating at least one of a shape and position of the cleaning liquid flow.

6. The automatic analyzer according to claim 5, further comprising:
a cleaning liquid flow determining unit that determines whether the cleaning liquid flow state estimated by the cleaning liquid flow estimating unit is usual or unusual; and
a cleaning liquid flow control mechanism that if the cleaning liquid flow state is determined to be unusual at the cleaning liquid flow determining unit, controls velocity of the cleaning liquid to be discharged from the cleaning nozzle.

7. The automatic analyzer according to claim 6, wherein: the cleaning liquid flow control mechanism is either a valve, a pump or a pipeline diameter selector mechanism that selects one of diameters of pipelines connected to the cleaning nozzle.

8. The automatic analyzer according to claim 6, further comprising:
a cleaning nozzle cleaning mechanism that, if the cleaning liquid flow state is determined to be unusual at the cleaning liquid flow determining unit, cleans an internal region of the pipeline connected to the cleaning nozzle.

9. The automatic analyzer according to claim 3, wherein: in terms of discharge angle, the cleaning liquid flow discharged from the cleaning nozzle is directed downward from a horizontal direction.

10. The automatic analyzer according to claim 2, wherein: the cleaning liquid flow existing when the dispensing nozzle exits the cleaning liquid flow is discharged towards a lower position than when the cleaning of the dispensing nozzle is started.

11. An automatic analyzer including a dispensing nozzle that aspirates/discharges a specimen or a reagent, and a cleaning nozzle that discharges a cleaning liquid flow to an outer wall of the dispensing nozzle, the automatic analyzer further comprising:
a storage unit used to store a plurality of operation patterns of the dispensing nozzle that each include at least one of a cleaning range of the dispensing nozzle cleaned using the cleaning liquid flow discharged from the cleaning nozzle, and an exit angle θ at an exit position where the dispensing nozzle exits the cleaning liquid flow;
a nozzle operation selector unit that selects, from the operation patterns of the dispensing nozzle stored into the storage unit, one operation pattern appropriate for the kind of specimen or reagent that the dispensing nozzle which has been cleaned aspirates; and
a nozzle driving unit that moves the nozzle according to the pattern selected by the nozzle operation selector unit,
wherein: the nozzle driving unit controls operation of the dispensing nozzle so that an angle θ formed between a velocity vector of the cleaning liquid flow and that of the dispensing nozzle, at the exit position where the dispensing nozzle exits the cleaning liquid flow, satisfies 90°<θ<180°or 180°<θ<270°.
